# EUROPEAN PATENT SPECIFICATION

(11) **EP 4 261 405 B1**
(45) Date of publication and mention of the grant of the patent: **25.11.2026**
(21) Application number: 21903297.6
(22) Date of filing: 02.12.2021
(51) Int. Cl.: F03D 3/02, F03D 3/06, F03D 13/35, F03D 9/25

(54) **VERTICAL-SHAFT WINDMILL**
WINDMÜHLE MIT VERTIKALER WELLE
ÉOLIENNE À ARBRE VERTICAL

(30) Priority: 09.12.2020 JP 2020204489
(43) Date of publication of application: 18.10.2023
(73) Proprietor: Global Energy Co., Ltd., Hamamatsu-shi, Shizuoka 434-0012 (JP)
(72) Inventor: SUZUKI, Masahiko, Hamamatsu-shi, Shizuoka 434-0012 (JP)
(74) Representative: Gislon, Gabriele
(86) International application number: PCT/JP2021/044277
(87) International publication number: WO 2022/124193

(56) References cited:
- WO-A1-2019/235343
- JP-A- 2006 118 384
- JP-A- 2011 047 391
- JP-A- 2011 179 497
- JP-A- 2011 179 497
- JP-A- 2017 066 878
- JP-A- 2017 066 878
- JP-A- S62 196 424
- JP-A- S62 196 424
- US-A1- 2005 244 271
- US-A1- 2012 126 542

## Description

### FIELD OF THE INVENTION

The present invention relates to a vertical-shaft wind turbine, particularly relates to a vertical-shaft wind turbine comprising a vertical shaft rotor supported by a vertical main shaft of which upper and lower end portions are respectively coupled with rotation shafts of upper and lower generators without using bearings, the generators being respectively arranged in upper and lower horizontal frame bodies of a support frame body for supporting the vertical shaft rotor, such that the vertical main shaft is vertically aligned and is cooperatively movable to reduce torsion.

### BACKGROUND OF THE INVENTION

Generally, as described in JP 2006-118384 A for example, a vertical main shaft of a vertical-shaft wind turbine is vertically provided on a generator, and upper and lower and/or intermediate portions of the vertical main shaft are supported by each bearing.

### SUMMARY OF THE INVENTION

### PROBLEMS TO BE SOLVED BY THE INVENTION

WO2019/235343A1 discloses a vertical-shaft wind turbine in which upper and lower portions of the vertical main shaft are supported by each of bearings. This type of wind turbine includes the same task to be solved as prior art using bearings disclosed in the present invention.
In the invention described in JP 2006-118384 A, since the upper and lower portions of the vertical main shaft are supported by each of the bearings, even though a rotation shaft of the generator and the vertical main shaft of the wind turbine are vertically supported, a deviation is generated. Therefore, the generator is loaded when the wind turbine rotates and accelerates, and torsion is generated on the vertical main shaft, thereby sometimes generating vibration and noise owing to the vibration.

### MEANS FOR SOLVING THE PROBLEMS

In view of the above disadvantages of the conventional techniques, the following technical means are taken according to the present invention.
(1) A vertical-shaft wind turbine comprising a plurality of lift-type vertical blades arranged at fixed intervals around a vertical main shaft of a vertical shaft rotor, wherein each of the lift-type vertical blades has a substantially vertical main portion and upper and lower inward circular arc-shaped portions that are respectively and continuously formed from a top and a bottom of the substantially vertical main portion to respectively elongate toward the vertical main shaft, a tip portion of the upper inward circular arc-shaped portion is fixed to a fixing portion of an upper blade fixture arranged on the vertical main shaft, and a tip portion of the lower inward circular arc-shaped portion is fixed to a fixing portion of a lower blade fixture arranged on the vertical main shaft,
   wherein the vertical-shaft wind turbine further comprises a support frame body which is framed with horizontal frame bodies horizontally arranged in upper and lower stages and a plurality of support poles, and a generator which is horizontally arranged in each plane central portion surrounded by inner frames respectively provided in the horizontal frame bodies,
   wherein the upper generator arranged in the upper horizontal frame body has a rotation shaft vertically protruding downward from a lower surface of the upper generator, the lower generator arranged in the lower horizontal frame body has a rotation shaft vertically protruding upward from an upper surface of the lower generator, upper and lower end surfaces of the vertical main shaft of the vertical shaft rotor are respectively coupled with a lower end surface of the rotation shaft vertically protruding downward from the upper generator and an upper end surface of the rotation shaft protruding upward from the lower generator such that the vertical main shaft of the vertical shaft rotor is concentrically and directly connected between the both rotation shafts of the upper and lower generators, and an outer peripheral side of each seam of coupling portions formed by said coupling is sheathed with a covering body for preventing decoupling, and wherein upper and lower end portions of the vertical main shaft of the vertical shaft rotor are respectively coupled and supported between the both rotation shafts of the upper and lower generators without using bearings so as to be concentrically and vertically aligned and be cooperatively movable to reduce torsion and vibration when rotating.
(2) The vertical-shaft wind turbine according to the above (1), wherein the horizontal frame bodies of the support frame body are arranged in upper, intermediate, and lower stages, an upper vertical shaft rotor is arranged between the upper and intermediate horizontal frame bodies, a lower vertical shaft rotor is arranged between the intermediate and lower horizontal frame bodies, and the generator is horizontally arranged in each of the plane central portions respectively surrounded by the inner frames respectively provided in the horizontal frame bodies,
   wherein the upper generator arranged in the upper horizontal frame body has the rotation shaft vertically protruding downward from the lower surface of the upper generator, the intermediate generator arranged in the intermediate horizontal frame body has a rotation shaft vertically protruding upward and downward respectively from upper and lower surfaces of the intermediate generator, the lower generator arranged in the lower horizontal frame body has the rotation shaft vertically protruding upward from the upper surface of the lower generator,
   wherein upper and lower end surfaces of the vertical main shaft of the upper vertical shaft rotor are respectively coupled with the lower end surface of the rotation shaft vertically protruding downward from the upper generator and an upper end surface of the rotation shaft protruding upward from the intermediate generator such that the vertical main shaft of the upper vertical shaft rotor is concentrically and directly connected between the both rotation shafts of the upper and intermediate generators, and an outer peripheral side of each seam of coupling portions formed by said coupling is sheathed with the corresponding covering body for preventing decoupling, thereby supporting the vertical main shaft of the upper vertical shaft rotor between the both rotation shafts of the upper and intermediate generators without using bearings, wherein upper and lower end surfaces of the vertical main shaft of the lower vertical shaft rotor are respectively coupled with the lower end surface of the rotation shaft vertically protruding downward from the intermediate generator and the upper end surface of the rotation shaft protruding upward from the lower generator such that the vertical main shaft of the lower vertical shaft rotor is concentrically and directly connected between the both rotation shafts of the intermediate and lower generators, and an outer peripheral side of each seam of coupling portions formed by said coupling is sheathed with the corresponding covering body for preventing decoupling, thereby supporting the vertical main shaft of the lower vertical shaft rotor between the both rotation shafts of the intermediate and lower generators without using bearings, and wherein the rotation shaft of the upper generator, the vertical main shaft of the upper vertical shaft rotor, the rotation shaft of the intermediate generator, the vertical main shaft of the lower vertical shaft rotor, and the rotation shaft of the lower generator are connected and supported to be concentrically and vertically aligned and be cooperatively movable.
(3) The vertical-shaft wind turbine according to the above (2), wherein the lower end surface of the rotation shaft of the upper generator is formed with a transverse recessed portion which is caved in a shaft direction to elongate in a transverse direction,
   wherein upper and lower end surfaces of the rotation shaft of the intermediate generator are respectively formed with a transverse recessed portion which is caved in a shaft direction to elongate in a transverse direction,
   wherein the upper end surface of the rotation shaft of the lower generator is formed with a transverse recessed portion which is caved in a shaft direction to elongate in a transverse direction,
   wherein upper and lower end surfaces of the vertical main shaft of the upper vertical shaft rotor are respectively formed with a transverse protruding portion which is projected in the shaft direction to elongate in a transverse direction,
   wherein upper and lower end surfaces of the vertical main shaft of the lower vertical shaft rotor are respectively formed with a transverse protruding portion which is projected in the shaft direction to elongate in a transverse direction,
   wherein the transverse protruding portions respectively formed on the upper and lower end surfaces of the vertical main shaft of the upper vertical shaft rotor are respectively fit to the transverse recessed portion on the lower end surface of the rotation shaft of the upper generator and the transverse recessed portion on the upper end surface of the rotation shaft of the intermediate generator such that the vertical main shaft of the upper vertical shaft rotor is concentrically and directly connected between the both rotation shafts of the upper and intermediate generators, and the outer peripheral side of each of the seams of the coupling portions formed by said fitting is sheathed with the corresponding covering body for preventing decoupling, and
   wherein the transverse protruding portions respectively formed on the upper and lower end surfaces of the vertical main shaft of the lower vertical shaft rotor are respectively fit to the transverse recessed portion on the lower end surface of the rotation shaft of the intermediate generator and the transverse recessed portion on the upper end surface of the rotation shaft of the lower generator such that the vertical main shaft of the lower vertical shaft rotor is concentrically and directly connected between the both rotation shafts of the intermediate and lower generators, and the outer peripheral side of each of the seams of the coupling portions formed by said fitting is sheathed with the corresponding covering body for preventing decoupling.

### ADVANTAGES OF INVENTION

According to the present invention, the following effects can be obtained.

According to the invention of the above (1), since the upper and lower end portions of the vertical main shaft of the vertical shaft rotor are respectively and integrally coupled and supported with the rotation shafts vertically facing each other of the upper and lower generators without using bearings to cooperatively move, a rotation force of the vertical main shaft can directly rotate the upper and lower generators to generate an electric power.
As a result, it is possible to use small-sized generators each of which has a small cogging torque, the vertical-shaft wind turbine of the present invention is excellent in starting performance at low wind speed, and is enhanced in a generation efficiency. Moreover, since the upper and lower end portions of the vertical main shaft are respectively and directly coupled and supported with the generators without using bearings, a power generation load is applied to the upper and lower end portions of the vertical main shaft when accelerating, the present invention has the effects of reducing torsion, and reducing vibration and noise owing to the vibration.
Furthermore, it is possible to apply regenerative brakes by the generators to the upper and lower end portions of the vertical main shaft respectively and simultaneously, thereby enabling the vertical-shaft wind turbine to be controlled with an excellent balance even in a strong wind.
Still further, it is possible to omit the bearing devices for supporting the vertical main shaft, and therefore it is possible to enhance working properties and reduce cost.

According to the invention of the above (2), the horizontal frame bodies of the support frame body are arranged in the upper, intermediate, and lower stages in the support frame body, the generators are respectively and horizontally arranged in the central portions of the respective horizontal frame bodies, and the vertical main shaft of the upper vertical shaft rotor is integrally connected and supported between the rotation shafts of the upper and intermediate generators without using bearings and the vertical main shaft of the lower vertical shaft rotor is integrally connected and supported between the rotation shafts of the intermediate and lower generators without using bearings such that the both vertical main shafts are integrally and cooperatively movable. Therefore, even though the vertical main shafts are arranged in multistages, it is possible to reduce vibration and noise owing to the vibration when accelerating.
Moreover, the same output can be obtained with small-sized generators each of which has a small cogging torque, thereby improving in starting performance even at low wind speed to enhance the acceleration efficiency and the generation efficiency of the wind turbine. Even though the rotation force is strong owing to a large number of the blades, it is possible to easily obtain an effect of a stable and secure controlling because the regenerative brakes by the three generators can be available even in a strong wind.

According to the invention of the above (3), each pair of the rotation shafts of the generators is integrally connected with the corresponding vertical main shaft of each of the vertical shaft rotors by the respective coupling portions, the protruding portions respectively formed on the upper and lower end surfaces of each of the vertical main shafts of the upper and lower vertical shaft rotors are respectively fit to the corresponding pair of the transverse the recessed portions of the respective rotation shafts of the generators in the upper and lower sides, and the covering bodies for preventing decoupling are respectively provided on the outer peripheral sides of the coupling portions formed thereby. Therefore, it is possible to easily obtain a complete connection.
Moreover, since the end surface of each of the rotation shafts of the generators and the facing end surface of the corresponding vertical main shaft of each of the vertical shaft rotors are respectively provided with the recessed portion and the protruding portion such that the recessed and protruding portions are fit between the end surfaces facing each other, each of the rotation shafts can be easily fit to the corresponding vertical main shaft. The covering bodies for preventing decoupling are respectively provided on the outer peripheral surfaces of the upper and lower end portions of the vertical main shafts of the upper and lower vertical shaft rotors such that each of the seams of the coupling portions formed when the protruding portions are respectively fit to the corresponding recessed portions of the rotation shafts of the generators is sheathed with the corresponding covering body, and each pair of the rotation shafts of the generators in the upper and lower sides is concentrically fixed with the corresponding vertical main shaft of each of the vertical shaft rotors. Therefore, each pair of the rotation shafts can be fit to the corresponding vertical main shaft such that linerlity is precisely maintained to reduce vibration.

### BRIEF DESCRIPTION OF THE DRAWINGS

Figure 1 is a front elevational view showing a vertical-shaft wind turbine of the present invention.
Figure 2 is a top plan view showing the vertical-shaft wind turbine shown in Fig. 1.
Figure 3 is a sectional view taken along the line III-III in Fig. 1.
Figure 4 is a front view showing each coupling state between a rotation shaft of each generator and a vertical main shaft of a vertical shaft rotor shown in Fig. 1.
Figure 5 is a top plan view showing a blade fixture shown in Fig. 1.
Figure 6 is a front view showing the blade fixture shown in Fig. 5.
Figure 7 is a top plan view showing a middle support arm shown in Fig. 1.
Figure 8 is a front view showing the middle support arm shown in Fig. 7.
Figure 9 is a front elevational view showing a vertical-shaft wind turbine of a second embodiment of the present invention.
Figure 10 is a top plan view showing the vertical-shaft wind turbine shown in Fig. 9.

### EMBODIMENTS OF THE INVENTION

An embodiment according to the present invention is described with the drawings as follows.

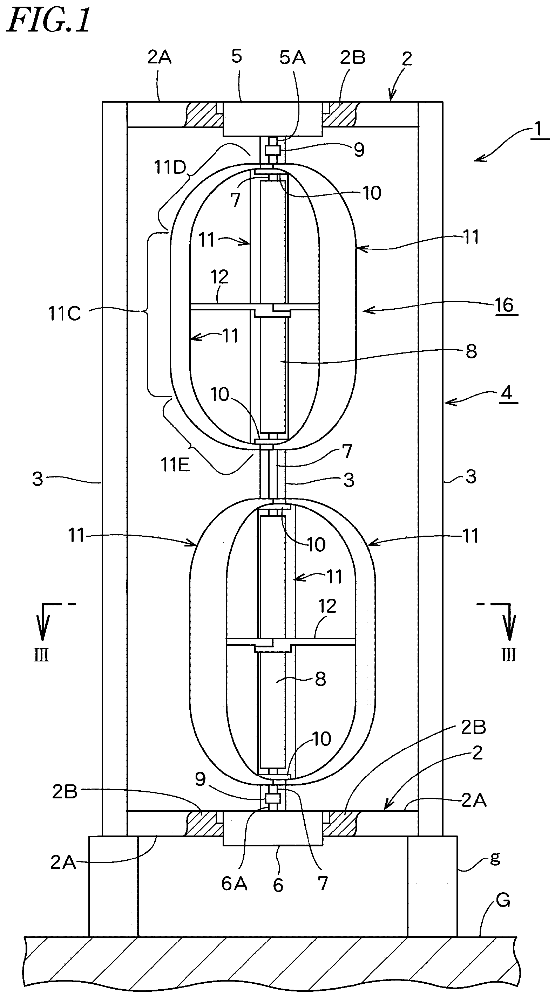

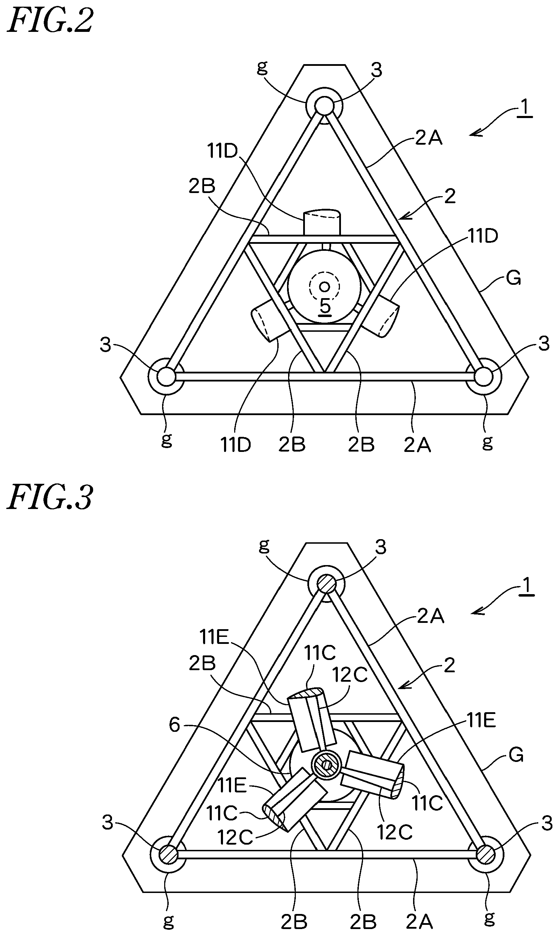

As shown in Fig.1, a vertical-shaft wind turbine 1 of the present invention includes a support frame body 4 that is three-dimensionally formed by upper and lower horizontal frame bodies 2, 2 and a plurality of support poles 3 on a support stand g mounted on a base G, and a vertical shaft rotor 16 supported by the support frame body 4. Although three pieces of the support poles 3 are shown in Figs. 2, 3, the number of the support poles 3 may be three or four pieces. Although the support poles 3 respectively in a pipe shape are shown in the drawings, the support poles 3 may be respectively a steel material molded in certain shape such as L-shaped steel material, H-shaped steel material, and so on.

As shown in Fig. 2, each of the horizontal frame bodies 2 includes three pieces of outer frames 2A composed in a triangle shape in a plane view by supported with three pieces of the support poles 3 and a plurality of inner frames 2B by which a generator 5 is horizontally arranged to be in a central portion of the triangle shape. Each of the horizontal frame bodies 2 has the same formation.

Upper and lower end portions of a vertical main shaft 7 of the vertical shaft rotor 16 are respectively and integrally coupled with a lower portion of a downward rotation shaft 5A of the upper generator 5 and an upper portion of an upward rotation shaft 6A of the lower generator 6 to be cooperatively movable by each coupling portion 9 formed thereby. Thus, the vertical main shaft 7 of the vertical shaft rotor 16 is supported without using bearings. Pluralities of lift-type vertical blades 11 are arranged around the vertical main shaft 7.

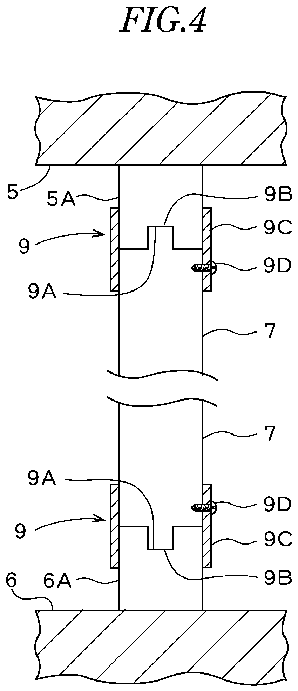

Each formation of the coupling portions 9 which respectively couples the upper and lower rotation shafts 5A, 6A of the upper and lower generators 5, 6 with the vertical main shaft 7 is exemplified in Fig. 4. A protruding portion 9B of the upper portion of the vertical main shaft 7 is fit to a recessed portion 9A of the lower portion of the downward rotation shaft 5A of the upper generator 5, an outer peripheral side of a seam formed thereby is sheathed with a covering body 9C, and the covering body 9C is fixed to the vertical main shaft 7 by a pin 9D, thereby strengthening the coupling.

Similarly, a protruding portion 9B of the lower portion of the vertical main shaft 7 is fit to a recessed portion 9A of the upward rotation shaft 6A of the lower generator 6, an outer peripheral side of a seam formed thereby is sheathed with another covering body 9C, and the covering body 9C is fixed to the vertical main shaft 7 by another pin 9D, thereby strengthening the coupling. Thus, it is possible to easily and surely couple the rotation shaft 6A of the generator 6 with the vertical main shaft 7. A universal joint not shown may be applied to each of the coupling portions 9 to enable canceling a narrow gap between the rotation shaft 5A of the generator 5 and the vertical main shaft 7 and a narrow gap between the rotation shaft 6A of the generator 6 and the vertical main shaft 7.

Reinforcing pipes 8 that are made of a thick-elastic-synthetic resin are fit to the vertical main shaft 7 except for proximal portions of the upper and lower generators 5, 6 and the upper and lower blade fixtures 10. Thus, the vertical main shaft 7 made of metal is reduced in a diameter, and it is possible to obtain effects of reducing a weight of the vertical main shaft 7 to increase a rotation efficiency, reducing deflection owing to a centrifugal force that is caused when the vertical main shaft 7 rotates at a high speed, reducing vibration owing to the deflection, and reducing noise owing to the vibration. The reinforcing pipe 8 is low in load on the rotation because its weight is small.

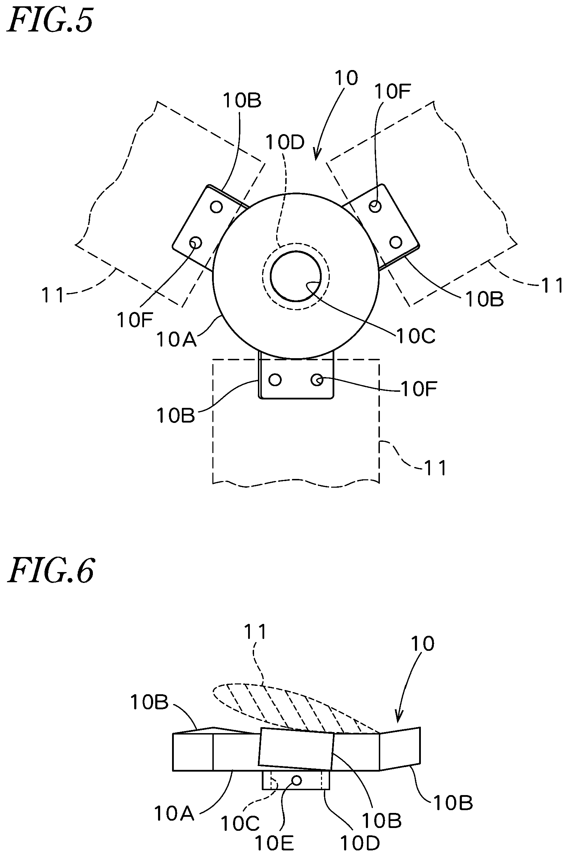

Two stages of the lift-type vertical blades 11 are fixed to the vertical main shaft 7 to be aligned in upper and lower sides such that the upper and lower blade fixtures 10, 10 are applied to each of the two sets of them. As shown in a top plan view of Fig. 5 and a front view of Fig. 6, the blade fixture 10 has a shaft hole 10C in a central portion and a fitting portion 10D formed on a periphery of the shaft hole 10C on a lower surface. The blade fixture 10 is fixed to the vertical main shaft 7 by fitting a pin into a pin hole 10E formed on a peripheral surface of the fitting portion 10D.

As shown in the top plan view of Fig. 5 and the front view of Fig. 6, the blade fixture 10 has a main portion 10A in a disk-like shape and fixing portions 10B formed on a peripheral portion of the main portion 10A to protrude in three directions. The upper and lower end portions of each of the lift-type vertical blades 11 are respectively fixed to the fixing portions 10B in the upper and lower sides by fixing with a screw into each of the screw holes 10F. When using another type of the vertical blade that has an inward inclined portion at the upper and lower end portions respectively, the blade fixture 10 of which the fixing portion 10B is elongated is used.

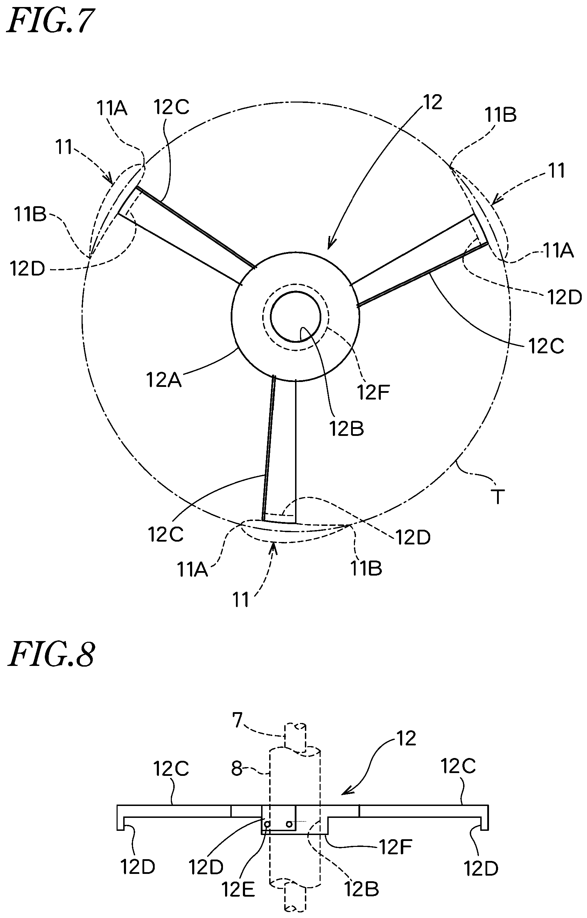

As shown in Fig. 1, an inner surface of a vertically middle portion of each of the lift-type vertical blades 11 is supported by a middle support arm 12 that is horizontally fixed on the reinforcing pipe 8 on the vertical main shaft 7.
As shown in a top plan view of Fig. 7 and a front view of Fig. 8, the middle support arm 12 has a main portion 12A in a disk-like shape, support arm portions 12C horizontally protruded in three directions from a peripheral portion of the main portion 12A, and a downward fixing portion 12D formed at a tip portion of each of the support arm portions 12C. An outer surface of the fixing portion 12D is made to come in contact with an inner surface of the rotating lift-type vertical blade 11 and is fixed with a screw fit into a pin hole 12E.

The middle support arm 12 is fixed to the reinforcing pipe 8 by fitting with a screw into a pin hole (not shown) formed on a fitting portion 12F protruding downward from the main portion 12A. As shown in Fig. 7, a leading edge 11A and a trailing edge 11B of the lift-type vertical blade 11 are set to rotate on the same rotation track T.

As shown in Fig. 7, the lift-type vertical blade 11 is thicker on the outer side than on the inner side with respect to the rotation track T of the blade as a boundary. An air stream passing along an outer surface of the lift-type vertical blade 11 passes through inward in a rear direction from the trailing edge 11B by Coanda effect to push the leading edge 11A of the blade in an outer direction by the reaction.

The configuration of the lift-type vertical blade 11 is not limited. As shown in Fig. 1, an upper inward circular arc-shaped portion 11D is formed from an upper portion of a substantially vertical main portion 11C to elongate in an arc shape toward the vertical main shaft 7, and a lower inward circular arc-shaped portion 11E is formed from a lower portion of the substantially vertical main portion 11C to elongate in an arc shape toward the vertical main shaft 7. Although each length of these three portions 11C, 11D, 11E is set to approximately one-third of the whole length of the blade 11, it is not limited to this configuration.

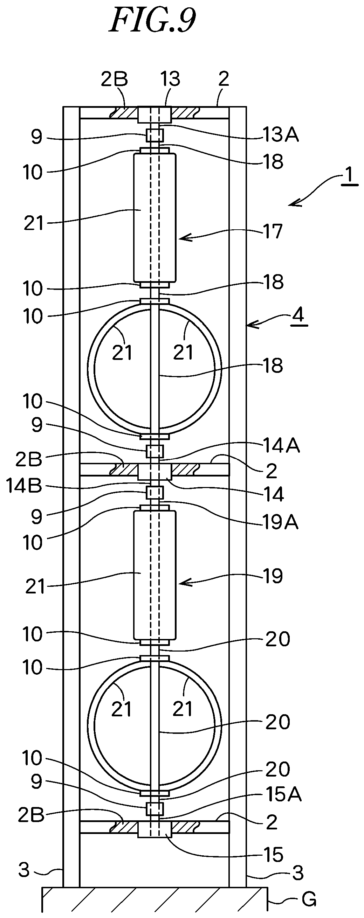

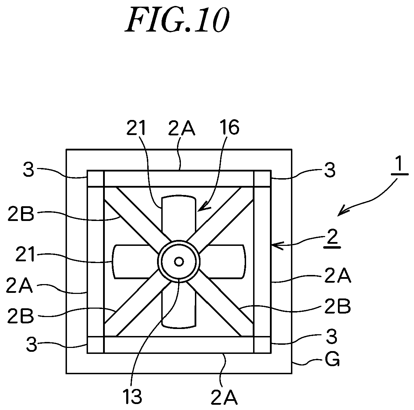

Figure 9 is a front elevational view showing a vertical-shaft wind turbine 1 of a second embodiment of the present invention, and Fig. 10 is a top plan view showing the vertical-shaft wind turbine 1. The same parts as those in the former embodiment are attached with the respective same reference signs as those in the former embodiment, and are not explained. In this second embodiment, horizontal frame bodies 2 are respectively arranged in three stages of upper, intermediate, and lower portions of a support frame body 4 such that height of the support frame body 4 is increased. Upper, intermediate, and lower generators 13, 14, 15 are respectively and horizontally fixed to the horizontal frame bodies 2.

Upper and lower end portions of a vertical main shaft 18 of an upper vertical shaft rotor 17 are respectively and integrally coupled with a downward rotation shaft 13A of the upper generator 13 and an upward rotation shaft 14A of the intermediate generator 14 to be cooperatively movable by each of upper and lower coupling portions 9, 9 formed thereby and be supported without using bearings. The same coupling portions 9 as described according to Fig. 4 can be used as the coupling portions 9 of this embodiment.

Upper and lower end portions of a vertical main shaft 20 of a lower vertical shaft rotor 19 are respectively and integrally coupled with a downward rotation shaft 14B of the intermediate generator 14 and an upward rotation shaft 15A of the lower generator 15 to be cooperatively movable by each of upper and lower coupling portions 9, 9 formed thereby and be supported without using bearings. Incidentally, the same reinforcing pipes 8 as described according to Fig. 1 can be fit to the upper and lower vertical main shafts 18, 20 respectively.

The upper vertical shaft rotor 17 is formed such that two sets of lift-type vertical blades 21, 21 are fixed to the upper vertical main shaft 18 to be aligned in upper and lower stages and a phase of the upper lift-type vertical blades 21 is shifted from that of the lower lift-type vertical blades 21 to be equiangularly apart. The configuration of the lift-type vertical blades 21 is optional. Although the two-vanes type, vertical shaft rotor 17 having the semicircular arc-shaped, lift-type vertical blades 21 in the front elevational view is shown in the drawings, the vertical shaft rotor 17 can be formed in a type of more than three vanes.
The lower vertical shaft rotor 19 is formed such that two sets of lift-type vertical blades 21, 21 are fixed to the lower vertical main shaft 20 to be aligned in upper and lower sides and a phase of the upper lift-type vertical blades 21 is shifted from that of the lower lift-type vertical blades 21 to be equiangularly apart.

In this manner, the horizontal frame bodies 2 are respectively arranged in the three stages of the upper, intermediate, and lower portions of the support frame body 4, the generators 13, 14, 15 are respectively arranged on the horizontal frame bodies 2, the vertical main shaft 18 of the upper vertical shaft rotor 17 is integrally connected between the downward rotation shaft 13A of the upper generator 13 and the upward rotation shaft 14A of the intermediate generator 14 to be supported without using bearings, and the vertical main shaft 20 of the lower vertical shaft rotor 19 is integrally connected between the downward rotation shaft 14B of the intermediate generator 14 and the upward rotation shaft 15A of the lower generator 15 to be supported without using bearings. Therefore, since the upper and lower end portions of each of the vertical main shafts 18, 20 of the respective vertical shaft rotors 17, 19 different in height are respectively fixed between the rotation shafts of the generators facing each other, it is possible to obtain a vibration free effect and an effect of reducing noise owing to the vibration.

Moreover, it is possible to use small-sized generators, thereby improving in starting performance even at low wind speed to enhance the rotation efficiency. When it is in a strong wind state, the upper, intermediate, and lower generators 13, 14, 15 can be respectively used as regenerative brakes. Therefore, it is possible to obtain an effect of a stable and secure controlling.

Incidentally, regarding the vertical-shaft wind turbine shown in Fig. 9, the vertical shaft rotors can be arranged in three stages by arranging the horizontal frame bodies 2 in four stages in the support frame body 4 and the generators are respectively arranged on the horizontal frame bodies 2. In such a case, the number of the vertical blades of each of the vertical shaft rotors may be not only two pieces as shown in the drawings but also one piece or three pieces.

As described in detail, since the upper and lower portions of the vertical main shaft of the vertical shaft rotor are respectively and integrally coupled with the rotation shafts of the respective upper and lower generators to be directly supported without using bearings, the present invention has the effects of reducing torsion of the vertical main shaft when rotating, reducing vibration owing to the torsion, and reducing noise owing to the vibration. Moreover, since it is possible to use small-sized generators each of which has a small cogging torque, the vertical-shaft wind turbine of the present invention is excellent in starting performance at low wind speed, is enhanced in the rotation efficiency, and can be widely utilized as a wind-power generation device used in an urban area and so forth.

### INDUSTRIAL APPLICABILITY

Since the generators are respectively arranged in the upper and lower horizontal frame bodies of the support frame body of the vertical-shaft wind turbine, and the vertical main shaft of the vertical shaft rotor is integrally connected between the rotation shafts of the respective upper and lower generators, the vertical-shaft wind turbine of the present invention can be enhanced in a starting performance by using small-sized generators, can be enhanced in a rotation efficiency, and can be widely utilized as a wind-power generation device used in an urban area and so forth.

### REFERENCE SIGNS LIST

1...vertical-shaft wind turbine
2...horizontal frame body
   2A...outer frame
   2B...inner frame
3...support pole
4... support frame body
5, 6...generator
   5A, 6A...rotation shaft
7... vertical main shaft
8...reinforcing pipe
9... coupling portion
   9A...recessed portion
   9B...protruding portion
   9C...covering body
   9D...pin
10...blade fixture
   10A...main portion
   10B...fixing portion
   10C...shaft hole
   10D...fitting portion
   10E...pin hole
   10F...screw hole
11...lift-type vertical blade
   11A..leading edge
   11B...trailing edge
   11C... substantially vertical main portion
   11D...upper inward circular arc-shaped portion
   11E...lower inward circular arc-shaped portion
12... middle support arm
   12A...main portion
   12B...shaft hole
   12C... support arm portion
   12D...fixing portion
   12E...pin hole
   12F...fitting portion
13, 14, 15...generator
   13A, 14A, 14B, 15A...rotation shaft
16, 17, 19.. .vertical shaft rotor
18, 20...vertical main shaft
21...lift-type vertical blade
G...base
g...support stand

## Claims

1. A vertical-shaft wind turbine (1) comprising a plurality of lift-type vertical blades (11; 21) arranged at fixed intervals around a vertical main shaft (7; 18, 20) of a vertical shaft rotor (16; 17, 19), wherein each of the lift-type vertical blades (11; 21) has a substantially vertical main portion (11C) and upper and lower inward circular arc-shaped portions (11D, 11E) that are respectively and continuously formed from a top and a bottom of the substantially vertical main portion (11C) to respectively elongate toward the vertical main shaft (7; 18, 20), a tip portion of the upper inward circular arc-shaped portion (11D) is fixed to a fixing portion (10B) of an upper blade fixture (10) arranged on the vertical main shaft (7; 18, 20), and a tip portion of the lower inward circular arc-shaped portion (11E) is fixed to a fixing portion (10B) of a lower blade fixture (10) arranged on the vertical main shaft (7; 18, 20),
**characterized in that** the vertical-shaft wind turbine (1) further comprises a support frame body (4) which is framed with horizontal frame bodies (2) horizontally arranged in upper and lower stages and a plurality of support poles (3), and a generator (5, 6; 13, 14, 15) which is horizontally arranged in each plane central portion surrounded by inner frames (2B) respectively provided in the horizontal frame bodies (2),
**in that** the upper generator (5) arranged in the upper horizontal frame body (2) has a rotation shaft (5A) vertically protruding downward from a lower surface of the upper generator (5), the lower generator (6) arranged in the lower horizontal frame body (2) has a rotation shaft (6A) vertically protruding upward from an upper surface of the lower generator (6), upper and lower end surfaces of the vertical main shaft (7) of the vertical shaft rotor (16) are respectively coupled with a lower end surface of the rotation shaft (5A) vertically protruding downward from the upper generator (5) and an upper end surface of the rotation shaft (6A) protruding upward from the lower generator (6) such that the vertical main shaft (7) of the vertical shaft rotor (16) is concentrically and directly connected between the both rotation shafts (5A, 6A) of the upper and lower generators (5, 6), and an outer peripheral side of each seam of coupling portions (9) formed by said coupling is sheathed with a covering body (9C) for preventing decoupling, and
**in that** upper and lower end portions of the vertical main shaft (7) of the vertical shaft rotor (16) are respectively coupled and supported between the both rotation shafts (5A, 6A) of the upper and lower generators (5, 6) without using bearings so as to be concentrically and vertically aligned and be cooperatively movable to reduce torsion and vibration when rotating.

2. The vertical-shaft wind turbine (1) according to claim 1, wherein the horizontal frame bodies (2) of the support frame body (4) are arranged in upper, intermediate, and lower stages, an upper vertical shaft rotor (17) is arranged between the upper and intermediate horizontal frame bodies (2), a lower vertical shaft rotor (19) is arranged between the intermediate and lower horizontal frame bodies (2), and the generator (13, 14, 15) is horizontally arranged in each of the plane central portions respectively surrounded by the inner frames (2B) respectively provided in the horizontal frame bodies (2),
wherein the upper generator (13) arranged in the upper horizontal frame body (2) has the rotation shaft (13A) vertically protruding downward from the lower surface of the upper generator (13), the intermediate generator (14) arranged in the intermediate horizontal frame body (2) has a rotation shaft (14A, 14B) vertically protruding upward and downward respectively from upper and lower surfaces of the the intermediate generator (14), the lower generator (15) arranged in the lower horizontal frame body (2) has the rotation shaft (15A) vertically protruding upward from the upper surface of the lower generator (15),
wherein upper and lower end surfaces of the vertical main shaft (18) of the upper vertical shaft rotor (17) are respectively coupled with the lower end surface of the rotation shaft (13A) vertically protruding downward from the upper generator (13) and an upper end surface of the rotation shaft (14A) protruding upward from the intermediate generator (14) such that the vertical main shaft (18) of the upper vertical shaft rotor (17) is concentrically and directly connected between the both rotation shafts (13A, 14A) of the upper and intermediate generators (13, 14), and an outer peripheral side of each seam of coupling portions (9) formed by said coupling is sheathed with the corresponding covering body (9C) for preventing decoupling, thereby supporting the vertical main shaft (18) of the upper vertical shaft rotor (17) between the both rotation shafts (13A, 14A) of the upper and intermediate generators (13, 14) without using bearings,
wherein upper and lower end surfaces of the vertical main shaft (20) of the lower vertical shaft rotor (19) are respectively coupled with the lower end surface of the rotation shaft (14B) vertically protruding downward from the intermediate generator (14) and the upper end surface of the rotation shaft (15A) protruding upward from the lower generator (15) such that the vertical main shaft (20) of the lower vertical shaft rotor (19) is concentrically and directly connected between the both rotation shafts (14B, 15A) of the intermediate and lower generators (14, 15), and an outer peripheral side of each seam of coupling portions (9) formed by said coupling is sheathed with the corresponding covering body (9C) for preventing decoupling, thereby supporting the vertical main shaft (20) of the lower vertical shaft rotor (19) between the both rotation shafts (14B, 15A) of the intermediate and lower generators (14, 15) without using bearings, and
wherein the rotation shaft (13A) of the upper generator (13), the vertical main shaft (18) of the upper vertical shaft rotor (17), the rotation shaft (14A, 14B) of the intermediate generator (14), the vertical main shaft (20) of the lower vertical shaft rotor (19), and the rotation shaft (15A) of the lower generator (15) are connected and supported to be concentrically and vertically aligned and be cooperatively movable.

3. The vertical-shaft wind turbine (1) according to claim 1, wherein the lower end surface of the rotation shaft (5A) of the upper generator (5) and the upper end surface of the rotation shaft (6A) of the lower generator (6) are respectively formed with a transverse recessed portion (9A) which is caved in a shaft direction to elongate in a transverse direction, and the upper and lower end surfaces of the vertical main shaft (7) of the vertical shaft rotor (16) are respectively formed with a transverse protruding portion (9B) which is projected in the shaft direction to elongate in a transverse direction, and
wherein the transverse protruding portions (9B) respectively formed on the upper and lower end surfaces of the vertical main shaft (7) of the vertical shaft rotor (16) are respectively fit to the transverse recessed portion (9A) on the lower end surface of the rotation shaft (5A) of the upper generator (5) and the transverse recessed portion (9A) on the upper end surface of the rotation shaft (6A) of the lower generator (6) such that the vertical main shaft (7) of the vertical shaft rotor (16) is concentrically and directly connected between the both rotation shafts (5A, 6A) of the upper and lower generators (5, 6), and the outer peripheral side of each of the seams of the coupling portions (9) formed by said fitting is sheathed with the covering body (9C) for preventing decoupling.

4. The vertical-shaft wind turbine (1) according to claim 2, wherein the lower end surface of the rotation shaft (13A) of the upper generator (13) is formed with a transverse recessed portion (9A) which is caved in a shaft direction to elongate in a transverse direction,
wherein upper and lower end surfaces of the rotation shaft (14A, 14B) of the intermediate generator (14) are respectively formed with a transverse recessed portion (9A) which is caved in a shaft direction to elongate in a transverse direction, wherein the upper end surface of the rotation shaft (15A) of the lower generator (15) is formed with a transverse recessed portion (9A) which is caved in a shaft direction to elongate in a transverse direction,
wherein upper and lower end surfaces of the vertical main shaft (18) of the upper vertical shaft rotor (17) are respectively formed with a transverse protruding portion (9B) which is projected in the shaft direction to elongate in a transverse direction, wherein upper and lower end surfaces of the vertical main shaft (20) of the lower vertical shaft rotor (19) are respectively formed with a transverse protruding portion (9B) which is projected in the shaft direction to elongate in a transverse direction, wherein the transverse protruding portions (9B) respectively formed on the upper and lower end surfaces of the vertical main shaft (18) of the upper vertical shaft rotor (17) are respectively fit to the transverse recessed portion (9A) on the lower end surface of the rotation shaft (13A) of the upper generator (13) and the transverse recessed portion (9A) on the upper end surface of the rotation shaft (14A) of the intermediate generator (14) such that the vertical main shaft (18) of the upper vertical shaft rotor (17) is concentrically and directly connected between the both rotation shafts (13A, 14A) of the upper and intermediate generators (13, 14), and the outer peripheral side of each of the seams of the coupling portions (9) formed by said fitting is sheathed with the corresponding covering body (9C) for preventing decoupling, and
wherein the transverse protruding portions (9B) respectively formed on the upper and lower end surfaces of the vertical main shaft (20) of the lower vertical shaft rotor (19) are respectively fit to the transverse recessed portion (9A) on the lower end surface of the rotation shaft (14B) of the intermediate generator (14) and the transverse recessed portion (9A) on the upper end surface of the rotation shaft (15A) of the lower generator (15) such that the vertical main shaft (20) of the lower vertical shaft rotor (19) is concentrically and directly connected between the both rotation shafts (14B, 15A) of the intermediate and lower generators (14, 15), and the outer peripheral side of each of the seams of the coupling portions (9) formed by said fitting is sheathed with the corresponding covering body (9C) for preventing decoupling.

## Patentansprüche

1. Vertikalwellen-Windturbine (1), umfassend eine Vielzahl von vertikalen Blättern vom Auftriebstyp (11; 21), die in festen Abständen um eine vertikale Hauptwelle (7; 18, 20) eines Vertikalwellenrotors (16; 17, 19) herum angeordnet sind, wobei jedes der vertikalen Blätter vom Auftriebstyp (11; 21) einen im Wesentlichen vertikalen Hauptabschnitt (11C) sowie obere und untere nach innen gerichtete kreisbogenförmige Abschnitte (11D, 11E) aufweist, die jeweils durchgehend von einem oberen Ende bzw. einem unteren Ende des im Wesentlichen vertikalen Hauptabschnitts (11C) ausgehend ausgebildet sind, um sich jeweils zu der vertikalen Hauptwelle (7; 18, 20) hin zu erstrecken, ein Spitzenabschnitt des oberen nach innen gerichteten kreisbogenförmigen Abschnitts (11D) an einem Befestigungsabschnitt (10B) einer an der vertikalen Hauptwelle (7; 18, 20) angeordneten oberen Blatthalterung (10) befestigt ist und ein Spitzenabschnitt des unteren nach innen gerichteten kreisbogenförmigen Abschnitts (11E) an einem Befestigungsabschnitt (10B) einer an der vertikalen Hauptwelle (7; 18, 20) angeordneten unteren Blatthalterung (10) befestigt ist,
**dadurch gekennzeichnet, dass** die Vertikalwellen-Windturbine (1) ferner einen Stützrahmenkörper (4), der mit horizontal in oberen und unteren Stufen angeordneten horizontalen Rahmenkörpern (2) und einer Vielzahl von Stützpfosten (3) gerahmt ist, und einen Generator (5, 6; 13, 14, 15) umfasst, der horizontal in jedem ebenen Mittelabschnitt angeordnet ist, der von jeweils in den horizontalen Rahmenkörpern (2) vorgesehenen Innenrahmen (2B) umgeben ist,
dass der in dem oberen horizontalen Rahmenkörper (2) angeordnete obere Generator (5) eine Drehwelle (5A) aufweist, die von einer Unterseite des oberen Generators (5) vertikal nach unten vorsteht, der in dem unteren horizontalen Rahmenkörper (2) angeordnete untere Generator (6) eine Drehwelle (6A) aufweist, die von einer Oberseite des unteren Generators (6) vertikal nach oben vorsteht, obere und untere Endflächen der vertikalen Hauptwelle (7) des Vertikalwellenrotors (16) jeweils mit einer unteren Endfläche der von dem oberen Generator (5) vertikal nach unten vorstehenden Drehwelle (5A) bzw. einer oberen Endfläche der von dem unteren Generator (6) nach oben vorstehenden Drehwelle (6A) gekoppelt sind, sodass die vertikale Hauptwelle (7) des Vertikalwellenrotors (16) konzentrisch und direkt zwischen den beiden Drehwellen (5A, 6A) des oberen und des unteren Generators (5, 6) verbunden ist, und eine Außenumfangsseite jeder Nahtstelle von durch diese Kopplung gebildeten Kopplungsabschnitten (9) mit einem Abdeckkörper (9C) zur Verhinderung einer Entkopplung ummantelt ist, und
dass obere und untere Endabschnitte der vertikalen Hauptwelle (7) des Vertikalwellenrotors (16) ohne Verwendung von Lagern jeweils zwischen den beiden Drehwellen (5A, 6A) des oberen und des unteren Generators (5, 6) gekoppelt und abgestützt sind, sodass sie konzentrisch und vertikal ausgerichtet und zusammenwirkend beweglich sind, um beim Drehen Torsion und Vibration zu verringern.

2. Vertikalwellen-Windturbine (1) gemäß Anspruch 1, wobei die horizontalen Rahmenkörper (2) des Stützrahmenkörpers (4) in oberen, mittleren und unteren Stufen angeordnet sind, ein oberer Vertikalwellenrotor (17) zwischen dem oberen und dem mittleren horizontalen Rahmenkörper (2) angeordnet ist, ein unterer Vertikalwellenrotor (19) zwischen dem mittleren und dem unteren horizontalen Rahmenkörper (2) angeordnet ist und der Generator (13, 14, 15) horizontal in jedem der ebenen Mittelabschnitte angeordnet ist, die jeweils von den jeweils in den horizontalen Rahmenkörpern (2) vorgesehenen Innenrahmen (2B) umgeben sind,
wobei der in dem oberen horizontalen Rahmenkörper (2) angeordnete obere Generator (13) die Drehwelle (13A) aufweist, die von der Unterseite des oberen Generators (13) vertikal nach unten vorsteht, der in dem mittleren horizontalen Rahmenkörper (2) angeordnete mittlere Generator (14) eine Drehwelle (14A, 14B) aufweist, die jeweils von einer Oberseite bzw. einer Unterseite des mittleren Generators (14) vertikal nach oben bzw. nach unten vorsteht, der in dem unteren horizontalen Rahmenkörper (2) angeordnete untere Generator (15) die Drehwelle (15A) aufweist, die von der Oberseite des unteren Generators (15) vertikal nach oben vorsteht,
wobei obere und untere Endflächen der vertikalen Hauptwelle (18) des oberen Vertikalwellenrotors (17) jeweils mit der unteren Endfläche der von dem oberen Generator (13) vertikal nach unten vorstehenden Drehwelle (13A) bzw. einer oberen Endfläche der von dem mittleren Generator (14) nach oben vorstehenden Drehwelle (14A) gekoppelt sind, sodass die vertikale Hauptwelle (18) des oberen Vertikalwellenrotors (17) konzentrisch und direkt zwischen den beiden Drehwellen (13A, 14A) des oberen und des mittleren Generators (13, 14) verbunden ist, und eine Außenumfangsseite jeder Nahtstelle von durch diese Kopplung gebildeten Kopplungsabschnitten (9) mit dem entsprechenden Abdeckkörper (9C) zur Verhinderung einer Entkopplung ummantelt ist, wodurch die vertikale Hauptwelle (18) des oberen Vertikalwellenrotors (17) ohne Verwendung von Lagern zwischen den beiden Drehwellen (13A, 14A) des oberen und des mittleren Generators (13, 14) abgestützt wird, wobei obere und untere Endflächen der vertikalen Hauptwelle (20) des unteren Vertikalwellenrotors (19) jeweils mit der unteren Endfläche der von dem mittleren Generator (14) vertikal nach unten vorstehenden Drehwelle (14B) bzw. der oberen Endfläche der von dem unteren Generator (15) nach oben vorstehenden Drehwelle (15A) gekoppelt sind, sodass die vertikale Hauptwelle (20) des unteren Vertikalwellenrotors (19) konzentrisch und direkt zwischen den beiden Drehwellen (14B, 15A) des mittleren und des unteren Generators (14, 15) verbunden ist, und eine Außenumfangsseite jeder Nahtstelle von durch diese Kopplung gebildeten Kopplungsabschnitten (9) mit dem entsprechenden Abdeckkörper (9C) zur Verhinderung einer Entkopplung ummantelt ist, wodurch die vertikale Hauptwelle (20) des unteren Vertikalwellenrotors (19) ohne Verwendung von Lagern zwischen den beiden Drehwellen (14B, 15A) des mittleren und des unteren Generators (14, 15) abgestützt wird, und
wobei die Drehwelle (13A) des oberen Generators (13), die vertikale Hauptwelle (18) des oberen Vertikalwellenrotors (17), die Drehwelle (14A, 14B) des mittleren Generators (14), die vertikale Hauptwelle (20) des unteren Vertikalwellenrotors (19) und die Drehwelle (15A) des unteren Generators (15) so verbunden und abgestützt sind, dass sie konzentrisch und vertikal ausgerichtet und zusammenwirkend beweglich sind.

3. Vertikalwellen-Windturbine (1) gemäß Anspruch 1, wobei die untere Endfläche der Drehwelle (5A) des oberen Generators (5) und die obere Endfläche der Drehwelle (6A) des unteren Generators (6) jeweils mit einem querverlaufenden Ausnehmungsabschnitt (9A) ausgebildet sind, der in einer Wellenrichtung vertieft ist, um sich in einer Querrichtung länglich zu erstrecken, und die obere und die untere Endfläche der vertikalen Hauptwelle (7) des Vertikalwellenrotors (16) jeweils mit einem querverlaufenden Vorsprungsabschnitt (9B) ausgebildet sind, der in der Wellenrichtung vorspringt, um sich in einer Querrichtung länglich zu erstrecken, und
wobei die jeweils an der oberen und der unteren Endfläche der vertikalen Hauptwelle (7) des Vertikalwellenrotors (16) ausgebildeten querverlaufenden Vorsprungsabschnitte (9B) jeweils in den querverlaufenden Ausnehmungsabschnitt (9A) an der unteren Endfläche der Drehwelle (5A) des oberen Generators (5) bzw. in den querverlaufenden Ausnehmungsabschnitt (9A) an der oberen Endfläche der Drehwelle (6A) des unteren Generators (6) eingepasst sind, sodass die vertikale Hauptwelle (7) des Vertikalwellenrotors (16) konzentrisch und direkt zwischen den beiden Drehwellen (5A, 6A) des oberen und des unteren Generators (5, 6) verbunden ist, und die Außenumfangsseite jeder der Nahtstellen der durch dieses Einpassen gebildeten Kopplungsabschnitte (9) mit dem Abdeckkörper (9C) zur Verhinderung einer Entkopplung ummantelt ist.

4. Vertikalwellen-Windturbine (1) gemäß Anspruch 2, wobei die untere Endfläche der Drehwelle (13A) des oberen Generators (13) mit einem querverlaufenden Ausnehmungsabschnitt (9A) ausgebildet ist, der in einer Wellenrichtung vertieft ist, um sich in einer Querrichtung länglich zu erstrecken,
wobei obere und untere Endflächen der Drehwelle (14A, 14B) des mittleren Generators (14) jeweils mit einem querverlaufenden Ausnehmungsabschnitt (9A) ausgebildet sind, der in einer Wellenrichtung vertieft ist, um sich in einer Querrichtung länglich zu erstrecken,
wobei die obere Endfläche der Drehwelle (15A) des unteren Generators (15) mit einem querverlaufenden Ausnehmungsabschnitt (9A) ausgebildet ist, der in einer Wellenrichtung vertieft ist, um sich in einer Querrichtung länglich zu erstrecken,
wobei obere und untere Endflächen der vertikalen Hauptwelle (18) des oberen Vertikalwellenrotors (17) jeweils mit einem querverlaufenden Vorsprungsabschnitt (9B) ausgebildet sind, der in der Wellenrichtung vorspringt, um sich in einer Querrichtung länglich zu erstrecken,
wobei obere und untere Endflächen der vertikalen Hauptwelle (20) des unteren Vertikalwellenrotors (19) jeweils mit einem querverlaufenden Vorsprungsabschnitt (9B) ausgebildet sind, der in der Wellenrichtung vorspringt, um sich in einer Querrichtung länglich zu erstrecken,
wobei die jeweils an der oberen und der unteren Endfläche der vertikalen Hauptwelle (18) des oberen Vertikalwellenrotors (17) ausgebildeten querverlaufenden Vorsprungsabschnitte (9B) jeweils in den querverlaufenden Ausnehmungsabschnitt (9A) an der unteren Endfläche der Drehwelle (13A) des oberen Generators (13) bzw. in den querverlaufenden Ausnehmungsabschnitt (9A) an der oberen Endfläche der Drehwelle (14A) des mittleren Generators (14) eingepasst sind, sodass die vertikale Hauptwelle (18) des oberen Vertikalwellenrotors (17) konzentrisch und direkt zwischen den beiden Drehwellen (13A, 14A) des oberen und des mittleren Generators (13, 14) verbunden ist, und die Außenumfangsseite jeder der Nahtstellen der durch dieses Einpassen gebildeten Kopplungsabschnitte (9) mit dem entsprechenden Abdeckkörper (9C) zur Verhinderung einer Entkopplung ummantelt ist, und
wobei die jeweils an der oberen und der unteren Endfläche der vertikalen Hauptwelle (20) des unteren Vertikalwellenrotors (19) ausgebildeten querverlaufenden Vorsprungsabschnitte (9B) jeweils in den querverlaufenden Ausnehmungsabschnitt (9A) an der unteren Endfläche der Drehwelle (14B) des mittleren Generators (14) bzw. in den querverlaufenden Ausnehmungsabschnitt (9A) an der oberen Endfläche der Drehwelle (15A) des unteren Generators (15) eingepasst sind, sodass die vertikale Hauptwelle (20) des unteren Vertikalwellenrotors (19) konzentrisch und direkt zwischen den beiden Drehwellen (14B, 15A) des mittleren und des unteren Generators (14, 15) verbunden ist, und die Außenumfangsseite jeder der Nahtstellen der durch dieses Einpassen gebildeten Kopplungsabschnitte (9) mit dem entsprechenden Abdeckkörper (9C) zur Verhinderung einer Entkopplung ummantelt ist.

## Revendications

1. Éolienne à arbre vertical (1) comprenant une pluralité de pales verticales de type portance (11 ; 21) disposées à intervalles fixes autour d'un arbre principal vertical (7 ; 18, 20) d'un rotor à arbre vertical (16 ; 17, 19), dans lequel chacune des pales verticales de type portance (11 ; 21) comporte une partie principale sensiblement verticale (11C) et des parties supérieure et inférieure en forme d'arc de cercle vers l'intérieur (11D, 11E) qui sont respectivement et de manière continue formées à partir d'un sommet et d'une base de la partie principale sensiblement verticale (11C) pour s'étendre respectivement vers l'arbre principal vertical (7 ; 18, 20), une partie d'extrémité de la partie supérieure en forme d'arc de cercle vers l'intérieur (11D) est fixée à une partie de fixation (10B) d'un dispositif de fixation de pale supérieur (10) disposé sur l'arbre principal vertical (7 ; 18, 20), et une partie d'extrémité de la partie inférieure en forme d'arc de cercle vers l'intérieur (11E) est fixée à une partie de fixation (10B) d'un dispositif de fixation de pale inférieur (10) disposé sur l'arbre principal vertical (7 ; 18, 20), **caractérisée en ce que** l'éolienne à arbre vertical (1) comprend en outre un corps de structure de support (4) qui est encadré par des corps de structure horizontaux (2) disposés horizontalement en étages supérieur et inférieur et d'une pluralité de poteaux de support (3), ainsi qu'un générateur (5, 6 ; 13, 14, 15) qui est disposé horizontalement dans chaque partie centrale de plan entourée par des structures intérieures (2B) respectivement prévus dans les corps de structure horizontaux (2),
**en ce que** le générateur supérieur (5) disposé dans le corps de structure horizontal supérieur (2) comporte un arbre de rotation (5A) faisant saillie verticalement vers le bas à partir d'une surface inférieure du générateur supérieur (5), le générateur inférieur (6) disposé dans le corps de structure horizontal inférieur (2) comporte un arbre de rotation (6A) faisant saillie verticalement vers le haut à partir d'une surface supérieure du générateur inférieur (6), les surfaces d'extrémité supérieure et inférieure de l'arbre principal vertical (7) du rotor à arbre vertical (16) sont respectivement couplées à une surface d'extrémité inférieure de l'arbre de rotation (5A) faisant saillie verticalement vers le bas à partir du générateur supérieur (5) et à une surface d'extrémité supérieure de l'arbre de rotation (6A) faisant saillie verticalement vers le haut à partir du générateur inférieur (6), de telle sorte que l'arbre principal vertical (7) du rotor à arbre vertical (16) soit relié de manière concentrique et directe entre les deux arbres de rotation (5A, 6A) des générateurs supérieur et inférieur (5, 6), et qu'un côté périphérique extérieur de chaque joint de parties d'accouplement (9) formées par ledit accouplement est recouvert d'un corps de recouvrement (9C) destiné à empêcher le désaccouplement, et
**en ce que** les parties d'extrémité supérieure et inférieure de l'arbre principal vertical (7) du rotor à arbre vertical (16) sont respectivement accouplées et supportées entre les deux arbres de rotation (5A, 6A) des générateurs supérieur et inférieur (5, 6) sans utiliser de paliers, de manière à être alignées concentriquement et verticalement et à pouvoir se déplacer de manière coopérative afin de réduire la torsion et les vibrations lorsqu'il y a rotation.

2. Éolienne à arbre vertical (1) selon la revendication 1, dans lequel les corps de structure horizontaux (2) du corps de structure de support (4) sont disposés en étages supérieur, intermédiaire et inférieur, un rotor à arbre vertical supérieur (17) est disposé entre les corps de structure horizontaux supérieur et intermédiaire (2), un rotor à arbre vertical inférieur (19) est disposé entre les corps de structure horizontaux intermédiaire et inférieur (2), et le générateur (13, 14, 15) est disposé horizontalement dans chacune des parties centrales planes respectivement entourées par les structures intérieures (2B) prévus respectivement dans les corps de structure horizontaux (2),
dans lequel le générateur supérieur (13) disposé dans le corps de structure horizontal supérieur (2) comporte l'arbre de rotation (13A) faisant saillie verticalement vers le bas depuis la surface inférieure du générateur supérieur (13), le générateur intermédiaire (14) disposé dans le corps de structure horizontal intermédiaire (2) comporte un arbre de rotation (14A, 14B) faisant saillie verticalement vers le haut et vers le bas respectivement depuis les surfaces supérieure et inférieure du générateur intermédiaire (14), le générateur inférieur (15) disposé dans le corps de structure horizontal inférieur (2) comporte l'arbre de rotation (15A) faisant saillie verticalement vers le haut depuis la surface supérieure du générateur inférieur (15), dans lequel les surfaces d'extrémité supérieure et inférieure de l'arbre principal vertical (18) du rotor à arbre vertical supérieur (17) sont respectivement couplées à la surface d'extrémité inférieure de l'arbre de rotation (13A) faisant saillie verticalement vers le bas à partir du générateur supérieur (13) et à une surface d'extrémité supérieure de l'arbre de rotation (14A) faisant saillie vers le haut à partir du générateur intermédiaire (14), de telle sorte que l'arbre principal vertical (18) du rotor à arbre vertical supérieur (17) soit relié de manière concentrique et directe entre les deux arbres de rotation (13A, 14A) des générateurs supérieur et intermédiaire (13, 14), et qu'un côté périphérique extérieur de chaque joint des parties d'accouplement (9) formées par ledit accouplement est recouvert par le corps de recouvrement correspondant (9C) afin d'empêcher le désaccouplement, supportant ainsi l'arbre principal vertical (18) du rotor à arbre vertical supérieur (17) entre les deux arbres de rotation (13A, 14A) des générateurs supérieur et intermédiaire (13, 14) sans utiliser de paliers, dans lequel des surfaces d'extrémité supérieure et inférieure de l'arbre principal vertical (20) du rotor à arbre vertical inférieur (19) sont respectivement couplées à la surface d'extrémité inférieure de l'arbre de rotation (14B) faisant saillie verticalement vers le bas à partir du générateur intermédiaire (14) et à la surface d'extrémité supérieure de l'arbre de rotation (15A) faisant saillie vers le haut à partir du générateur inférieur (15), de telle sorte que l'arbre principal vertical (20) du rotor à arbre vertical inférieur (19) soit relié de manière concentrique et directe entre les deux arbres de rotation (14B, 15A) des générateurs intermédiaire et inférieur (14, 15), et qu'un côté périphérique extérieur de chaque joint de parties d'accouplement (9) formées par ledit accouplement est recouvert par le corps de recouvrement correspondant (9C) afin d'empêcher le désaccouplement, supportant ainsi l'arbre principal vertical (20) du rotor à arbre vertical inférieur (19) entre les deux arbres de rotation (14B, 15A) des générateurs intermédiaire et inférieur (14, 15) sans utiliser de paliers, et
dans lequel l'arbre de rotation (13A) du générateur supérieur (13), l'arbre principal vertical (18) du rotor à arbre vertical supérieur (17), l'arbre de rotation (14A, 14B) du générateur intermédiaire (14), l'arbre principal vertical (20) du rotor à arbre vertical inférieur (19) et l'arbre de rotation (15A) du générateur inférieur (15) sont reliés et soutenus de manière à être alignés concentriquement et verticalement et à pouvoir se déplacer de manière coopérative.

3. Éolienne à arbre vertical (1) selon la revendication 1, dans lequel la surface d'extrémité inférieure de l'arbre de rotation (5A) du générateur supérieur (5) et la surface d'extrémité supérieure de l'arbre de rotation (6A) du générateur inférieur (6) sont respectivement pourvues d'une partie en retrait transversale (9A) qui est creusée dans une direction d'arbre de manière à s'étendre dans une direction transversale, et les surfaces d'extrémité supérieure et inférieure de l'arbre principal vertical (7) du rotor à arbre vertical (16) sont respectivement pourvues d'une partie saillante transversale (9B) qui fait saillie dans la direction d'arbre de manière à s'étendre dans une direction transversale, et
dans lequel les parties saillantes transversales (9B) formées respectivement sur les surfaces d'extrémité supérieure et inférieure de l'arbre principal vertical (7) du rotor à arbre vertical (16) s'emboîtent respectivement dans la partie en retrait transversale (9A) située sur la surface d'extrémité inférieure de l'arbre de rotation (5A) du générateur supérieur (5) et dans la partie en retrait transversale (9A) située sur la surface d'extrémité supérieure de l'arbre de rotation (6A) du générateur inférieur (6), de telle sorte que l'arbre principal vertical (7) du rotor à arbre vertical (16) soit relié de manière concentrique et directe entre les deux arbres de rotation (5A, 6A) des générateurs supérieur et inférieur (5, 6), et le côté périphérique extérieur de chacun des joints des parties d'accouplement (9) formées par ledit emboîtement est recouvert par le corps de recouvrement (9C) afin d'empêcher le désaccouplement.

4. Éolienne à arbre vertical (1) selon la revendication 2, dans lequel la surface d'extrémité inférieure de l'arbre de rotation (13A) du générateur supérieur (13) est pourvue d'une partie en retrait transversale (9A) qui est creusée dans une direction d'arbre pour s'étendre dans une direction transversale,
dans lequel les surfaces d'extrémité supérieure et inférieure de l'arbre de rotation (14A, 14B) du générateur intermédiaire (14) sont respectivement pourvues d'une partie en retrait transversale (9A) qui est creusée dans une direction d'arbre de manière à s'étendre dans une direction transversale,
dans lequel la surface d'extrémité supérieure de l'arbre de rotation (15A) du générateur inférieur (15) est pourvue d'une partie en retrait transversale (9A) qui est creusée dans une direction d'arbre pour s'étendre dans une direction transversale,
dans lequel les surfaces d'extrémité supérieure et inférieure de l'arbre principal vertical (18) du rotor à arbre vertical supérieur (17) sont respectivement pourvues d'une partie saillante transversale (9B) qui fait saillie dans la direction d'arbre de manière à s'étendre dans une direction transversale,
dans lequel les surfaces d'extrémité supérieure et inférieure de l'arbre principal vertical (20) du rotor à arbre vertical inférieur (19) sont respectivement pourvues d'une partie saillante transversale (9B) qui fait saillie dans la direction d'arbre pour s'étendre dans une direction transversale,
dans lequel les parties saillantes transversales (9B) formées respectivement sur les surfaces d'extrémité supérieure et inférieure de l'arbre principal vertical (18) du rotor à arbre vertical supérieur (17) s'emboîtent respectivement dans la partie en retrait transversale (9A) située sur la surface d'extrémité inférieure de l'arbre de rotation (13A) du générateur supérieur (13) et la partie en retrait transversale (9A) située sur la surface d'extrémité supérieure de l'arbre de rotation (14A) du générateur intermédiaire (14), de telle sorte que l'arbre principal vertical (18) du rotor à arbre vertical supérieur (17) soit relié de manière concentrique et directe entre les deux arbres de rotation (13A, 14A) des générateurs supérieur et intermédiaire (13, 14), et le côté périphérique extérieur de chacun des joints des parties d'accouplement (9) formées par ledit emboîtement est recouvert par le corps de recouvrement correspondant (9C) afin d'empêcher le désaccouplement, et
dans lequel les parties saillantes transversales (9B) formées respectivement sur les surfaces d'extrémité supérieure et inférieure de l'arbre principal vertical (20) du rotor à arbre vertical inférieur (19) s'emboîtent respectivement dans la partie en retrait transversale (9A) située sur la surface d'extrémité inférieure de l'arbre de rotation (14B) du générateur intermédiaire (14) et dans la partie en retrait transversale (9A) située sur la surface d'extrémité supérieure de l'arbre de rotation (15A) du générateur inférieur (15), de telle sorte que l'arbre principal vertical (20) du rotor à arbre vertical inférieur (19) soit relié de manière concentrique et directe entre les deux arbres de rotation (14B, 15A) des générateurs intermédiaire et inférieur (14, 15), et le côté périphérique extérieur de chacun des joints des parties d'accouplement (9) formées par ledit emboîtement est recouvert par le corps de recouvrement correspondant (9C) afin d'empêcher le désaccouplement.
